# EUROPEAN PATENT APPLICATION

(11) **EP 3 603 406 A1**
(43) Date of publication of application: **05.02.2020**
(21) Application number: 19020542.7
(22) Date of filing: 26.09.2019
(51) Int. Cl.: A23B 4/015, A23B 4/023, A23B 4/28, A23B 4/01, A23L 13/70

(54) **METHOD FOR DISSOLUTION OF THE CELL MEMBRANE OF MEAT**

(30) Priority: 31.07.2018 DK PA201800428
(71) Applicant: Dalsgaard, Rita Egebjerg, 8600 Silkeborg (DK); Egebjerg, Jørgen, 1815 Askim (NO)
(72) Inventor: Dalsgaard, Rita Egebjerg, 8600 Silkeborg (DK); Egebjerg, Jørgen, 1815 Askim (NO)

(57) **Abstract**

The invention is a continuous process, which has purpose to bring the cell membrane in raw meat cells into solution, so that there is opened for access to the salt soluble proteins, which are situated inside the cells. The salt cannot pass the membrane, before it has been broken down, something that takes many hours, whereas by microwave treatment the break down happens instantly. Brine is injected thereafter into the raw meat in a dense pattern, such that the raw meat is even salted. For total dissolution of the cell membrane the raw meat is in the end treated with ultrasound, which creates lysis, which opens the cell membrane to the salt soluble proteins. This to secure a total dissolution of the cell membrane and the intracellular proteins.

The invention is suitable for the meat and fish industry, where there today is applied long salting processes. The invention solves the problem of fast access of salt to the salt soluble proteins, and there do not exist any known techniques for solving this problem.

## Description

The invention relates to a method for treatment of raw meat as fish, raw animal meat or other raw meat product or raw meat or raw meat products from the alternating heat animals and includes the treatment of the meat with salting, microwaves and ultrasound/mechanical vibration.

Salting and drying are the oldest method of preservation we know, and it has not changed significantly since the 16^{th} century.
It was the Dutch, Portuguese, Spaniols, French and English who started with salting on board the vessels in order to bring the catch home from the fishing fields found in the northernmost waters of Europe. They brought the salted fish home where they were subsequently dried.
In Norway it was the fishermen themselves who conducted both salting and drying. Salting took place on the fish yards and the drying took place at selected places near the lake where the fish could be washed before outlaying on the rocks for drying.
From the catch of the fish it is essential that it is cleaned and cooled as soon as possible to limit biochemical and microbiological reactions. Catching method and temperature are also important to rigor mortis. It provides the best quality of eating and the highest yield if fish, which are frozen for later thawing and processing, are frozen prior to rigor mortis.
Fish may be preserved by that they are added large amounts of salt and subsequent drying. Salting has been developed from being a single stage to now a multi-stage process, which includes plug salting (pre-salting) which makes it possible to shorten the salting time and provide a homogenous salt concentration in the fish muscle.
Plug salting takes place with pre-mixed brine, possibly by addition of phosphate, and of different strength, injected into the fish through a net of thin needles. This provides a uniform pattern with instant distribution of the salt in the entire fillet. Subsequently the fish is dry salted in order to obtain the right salt concentration in the finished product. During this long-lasting conservation method, oxidation is still possible especially of lipids in the fish muscle. The degree of unsaturation rather than a high lipid content makes a food product vulnerable to rancidity. It will result in a change of both colour and taste. Rancidity is increased by metal ions in the fish muscle and the applied salt. Oxidative rancidity affects also the proteins of food products. There is reason to assume that rancid food products may have negative effect on the health of the consumer.
There exist many variants of dry salting, adapted to storage time and application areas for the finished salted fish. In some case the salting is a long-term conservation, where salt has to be withdrawn again from the fish by water dissolution prior to a further preparation and consumption. Dry salting is mostly used on lean fish sorts as cod, ling, haddock and coalfish. In other cases the fish is pickled to obtain a more firm texture and more taste.

Saltfish/clip fish are prepared by salting and drying. A number of different salting methods have been used.
Dry salting where the fish is salted with coarse salt in open vessels, such that the brine which is formed runs away.
Brine salting, the fish is laid in a brine, which have been prepared in advance.
Pickle salting, as by dry salting, but in a closed vessel, the brine which is formed becomes fully saturated with salt but does not run away. If needed more fully saturated brine is added. Pickle is equal to saturated brine.
Plug salting is pre-mixed brine injected in different strength into the fish through a net of thin needles.
There are more methods for further treatment of the fish which are plug salted. The fish which have been plug salted is laid in brine in a closed vessel, and the next day re-laid in a closed vessel with bottom plug and dry salt between the layers. Other known methods are that the fish is dry salted and added brine in closed vessels with bottom plugs, which after a time of 4-12 days, preferably 7 days, the bottom plugs are removed, so that the brine can run out. After further 10-20 days, preferably 14 days the fish fillets are packed in cartons. This is salt fish.
Preparation of clip fish is a combination of salting and drying. Like with dry fish clip fish traditionally have been prepared from cod. In the past the fish has been dried by that it has been laid out over the rocks, the Norwegian name clip fish comes from klepp, which is a rounded off naked rock, when there was good drying conditions. Today the clip fish is prepared in door in large automatic electrically controlled drying plants. There is large market for clip fish. And there has for long time been export of clip fish to all the four corners of the earth.
Salting, irrespective of the method has two purposes, the first is to lower the water activity a^{w} which is an expression, which is defined by the steam pressure of water over a food product relative to the steam pressure over pure water. It is only the free water which add to the steam pressure. Water bound to for example proteins and carbohydrates does not. The water activity is an expression for the accessible water amount, which are of importance to microorganism's possibility to live in food products. If one lowers the free water by drying, salting or sugar pickling, one lowers the water activity and thus the possibility for the microorganisms to live and reproduce itself. The lower the water activity is the longer the durability.
The only safe according to prior art valid for salt/clip fish, are that frozen raw products have a higher yield than fresh. Something that no one has ever tried to find a solution on. WO2007/100261 A1 describes a method for faster treatment of raw fish fillets applying plug salting and then microwave treatment with 2,45 GHz. The method itself takes only 2 hours. This is a significantly shorter processing time than with other known techniques. There is data on, that the treatment results in a protein loss of only 1-2 weight percent, which is seen relative to plug salting alone resulting in a protein loss of up to 15%. The purpose relative to the known techniques was to provide a faster method for stabilization of raw fish meat while keeping the taste, durability, and yield or even better improve relative to the known techniques.

Due to the high competition on the consumer market there is still a desire to provide methods, which are even more effective than the methods according to prior art. A better method should be faster and at the same time keep taste, consistency, and durability of raw fish meat products.

### Description of the invention

Comprehensive research with experiments with several hundred samples from many batches, both frozen and fresh cod of the species Gadus morhua, have led to, that a set of methods for the destruction of the cell membrane in raw fish meat has been studied for the effect measured based on the percentage of the weight of the fish, which has been kept after the termination of conservation. The methods have been compared with the percentage kept by traditional plug salting.

The method according to the invention is a method for treatment of raw meat, where the method according to claim 1 is characterized by that it comprises the following steps:
a) The raw meat is treated with microwaves to lower the elasticity of the cell membranes of the raw meat,
b) hereafter the microwave treated raw meat is plug salted to achieve an even distribution of the added salt in the whole raw meat
c) thereafter the raw meat is vibration treated e.g. ultrasonic treated to ensure the solution of the cell membrane and proteins of the raw meat.

The method according to claim 2 is embodiments for continuous operation and partly continuous operation.

The microwaves are more closely characterized by their effect and the frequency of the microwaves in claim 3 and 4 and equipment for delivering the effect of the microwaves in claim 5.

The method must according to claim 6 be controlled, such that the temperature is kept on maximum 26 grades Celsius to keep the taste and durability of the raw meat.

Claim 7 and 8 characterize each an embodiment for the method according to the invention with a preliminary preparation of raw fish meat, respectively an optimal embodiment of the same.

Claim 9 characterizes an embodiment for, how the preliminary work upstream of the entrance of the said microwave oven may be performed on raw fish meat.

Claim 10 characterizes an embodiment for, how the effect, which have to be provided by the magnetrons, may be calculated.

Claim 11 and 12 characterize embodiments for plug salting.
Claim 13 is an embodiment, where said plug salter controls the speed of a transport belt.
Claim 14 characterizes a plant-setup according to the invention suitable for performing the method of the invention, that is a microwave oven.
Claim 15 characterizes a plant-setup as in claim 14, where the plant further comprises a plug salter after the microwave oven.

### Detailed description

A large study was done with the following preliminary experiments.

### Experiment 1.

Preliminary experiments frozen raw products were taken from an automatic thawing plant, and followingly adjusted in a vessel to a temperature of 0 grades. Same temperature had the fresh raw products. There were withdrawn 180 samples of both qualities, from different batches, for dry matter and water determination. By the determination we arrived at that there was no significant difference, the difference was smaller than + - 1,5% between the frozen raw products. The difference was same between the fresh ones.
There was in the same way as in experiment 1 withdrawn 180 samples from frozen and 180 from fresh cods. These were divided into portions of 20 samples, from each quality placed in a highspeed cooled centrifuge. Speed and time were constant at all control points and showed the greatest shrinkage on the thawed raw products. The samples from the frozen fishes yielded the largest weight shrinkage. Something that is explained by that the cell walls were frost burst, and intracellular liquid got the possibility to find an outlet. The samples were not given any treatment, but only a centrifugation was performed to find the degree of destruction of the thawed cell membrane, compared with the fresh ones.
The fresh had a shrinkage by the centrifugation on 1,8-3,3%. The thawed had a shrinkage from 3,2-14,4%. There were found large differences on the yield of the frozen samples. Something that may have many causes, some of which the fish may have stayed for too long on hook or been for too long in net or overfilled trawl, or during the freezing in of the fish.
The place of formation of the ice crystals and size depends on the speed of the freezing in, and of whether the fish is frozen pre, in or post rigor mortis. In a pre-rigor fish the water is only present inside the muscle cells, and by freezing the ice crystals will for this reason be formed there. The ice crystals are preferably small, and only when the freezing process runs slowly, will there be formed large ice crystals. In rigor and post rigor fish, however, a little part of the water will be outside the cells, and in this way the freezing speed achieves high importance for the formation of ice crystals. If freezing is fast, small ice crystals will be formed both inside the cells and outside.
When water freezes to ice, the water molecules will order themselves in a regular crystal structure. This do other liquids also, when they freeze to a solid state, but in the case with water the ice crystal will fill more than the liquid water, something that is very atypical to liquids. Actually, ice fills about 10% more than the liquid form. As water ice fills more than the liquid phase, the expansion will cause the cell wall to burst, as the cell membrane has become less elastic due to the freezing. By the performed controlled experiments, we have done, it was clear that by microscopy that the cell membrane was frost burst, but with varying destruction. The frost burst of the cell membrane provides salt entrance to the intracellular salt soluble proteins. This is the reason for the higher yield of the frozen fish with the known preservation methods.

By microwave treatment we obtained on the whole uniform weight shrinkage by centrifugation, both of the thawed frozen and the fresh, the shrinkage was between 12,8% and 15,2%, something that shows the ability of the microwaves to be highly contributing to destruction of the cell membrane, and thus provide free access to the salt soluble proteins.
To create functionality in fish meat is based primary on mobilization of components originating from the muscle tissue composition of the raw products. A muscle is built of fiber bundles surrounded by binding tissue (perimysium, epimysium). The single muscle cells in a fiber bundle is surrounded by a cell membrane (sarcolemna). The muscle cell comprise myofibrils. They consist each of sarcomers, which is the smallest contractile unit and is built from thin and thick filaments. The sarcomers are surrounded by sarcoplasma containing the sarcoplasmatic proteins, which are water-soluble. The thin filaments in the sarcomer are built from proteins of the protein actin and the thick ones of the protein myosin. During rigor mortis the two filament proteins unites and forms the complex actomyosin. Actin, myosin, and actomyosin are salt soluble proteins.
Those by weight the largest components in fresh cod muscles are water (average 78-80%), protein (average 20%) and fat (average 0,3%). The protein component is divided usually into intracellular and ekstracellular proteins, 90-95% of the water in a muscle is found between the structure proteins.
The intracellular proteins dominate and are subdivided into sarcoplasmatic ones, which consists of 32-35% low molecular water-soluble low viscous. The myofibrillar constitutes 50-55% and are contractile, high molecular, salt soluble and high viscous. It is the intracellular proteins actomyosin and sarcoplasma protein, which constitutes the salt and water-soluble proteins and are the most important actors in mobilization of the water binding and emulsifying property during processing. During rigor mortis the two filament proteins unites and forms the complex actomyosin. Actin, myosin, and actomyosin are salt soluble proteins. The extraction of water-soluble and salt soluble proteins depends besides the raw material type also of the salt concentration, ion strength, pH and not least of the type of salt. It is the intracellular proteins (actomyosin and sarcoplasma protein), which constitutes the salt and water-soluble proteins and are the most important actors in mobilization of the water binding and emulsifying property during processing. To bring the said proteins into solution and extract them is a fundamental operation in the manufacture of processed fish meat products, whether it is true of whole muscle or emulsified products. Extracted myosin and actomyosin (also named exudate) denature during microwave treatment and forms a gel, which binds water, fat, and other ingredients together in a stable matrix. In mitochondria matrix means a fine corny mass of proteins and lipids between the outer and inner membrane. Sarcoplasmatic proteins may contribute to the emulsification, but on the other hand not to gel formation. After microwave treatment the sarcoplasmatic proteins binds to the stable matrix.
The presence of salt is a necessary condition for the solubility of the dissociated myosin which is dependent of, that the ion strength in the water phase is sufficiently high. The experience shows, that the optimal extraction level by application of NaCl is between 3,2-5,8% NaCl, over 5,8 the extraction level drops.
Salt (NaCl) is added during processing with the purpose of increasing the solubility of the salt soluble proteins, which are central to the emulsifying property and water binding.
The microwave treatment has the purpose of destroying the cell membrane in order to obtain free access to the salt soluble proteins. The solubility of the dissociated myosin depends on, that the ion strength in the water phase is sufficiently high. Addition of salt makes sure that the ion strength becomes sufficiently high to bring the myosin into solution. Without exposure to microwaves the salt soluble proteins use many hours to penetrate the cell membrane and the salt soluble proteins denature and loose the water binding property. The myosin gel is important, in that it is good emulsifier, which makes sure to bind the free liquid, fill out pores and holes and moreover bind the single muscles and pieces together in connection with drying.
The blood cells have also a membrane, which intracellularly has a content of 0,9% salt. They comprise iron and cupper compounds, if the fish has been killed in a stressed condition there will be plenty of blood in the muscle and thus many metal ions. When the fish fillets are traditionally salted with 18°Baumé, the salt concentration will be larger outside the blood cell than inside the blood cell, the salt content in blood is 0,9%. There will then go more water molecules out of the cell than into the cell. That is the water content of the cell will decrease and the cell shrinks and becomes curled, that is the blood cell will be locked, where they are in the fish muscle. There will not arise a balance between the cells, which makes that the water molecules return into the cell. By microwave treatment before plug salting the blood cell membrane is destroyed and hemoglobin, which comprises metal compounds and water can leave the muscle. This peculiar pellicle makes that the cells may be stretched and become long and thin, such that they can pass through the thinnest blood vessels and thus keep life going on in all parts of the body. Erytrocyttes are the blood bodies which we name red blood cells. Erytrocyttes are as sacs filled with the molecule hemoglobin. It is the hemoglobin which binds to the oxygene, such that this is carried around to the cells. The erytrocyttes have a diameter which is larger than the one of that to the capillaries, which they penetrate. Due to the flexibility of the cell membrane of the erytrocyttes, they still change form and become stretched, so that they can be pressed through the capillaries.
The microwave treatment affects also the cell membrane around the red blood cells, which comprises the red dyestuff hemoglobin.

Microwave, salting, and ultrasonic treatment in the cited sequence is the basic according to the present invention. The preferred embodiment is a continuous process comprising at least the two first steps. Continuous should be understood in the strict sense of the word. Partly continuous processes may in some cases be applied. The most important is that not too long passes between the microwave treatment step and the plug salting step, such that salt manages to enter the inside of the cells to the intracellular proteins, which shall be brought into solution of the salt and later become part of the actomycincomplex, before part of the cell protein has managed to denature.
An embodiment starts with that there directly from the splitting machine is carried fillets to the cutting band, where trimming, clean cutting and orientation, so that the meat side turn up. Hereafter the fish fillets are carried into a microwave tunnel oven.

At the entrance of the tunnel there is placed a weight/volume, scanner, meter, which register a field, which corresponds to the field the magnetrons placed in the microwave tunnel cover. Either the magnetrons are placed over or under a belt conveyer, which conveys the fish forward, preferred is over due to cleanliness. Magnetrons are placed in rows of 4 across the belt and 4 in the longitudinal direction. Each magnetron has an effect of 1000 W and is powered with a controlled power supply from an electronic transformer, which has infinitely variable regulation from 80 W to 1300 W. The voltage is high voltage of 1450 volt. Each power supply may be basically adjusted so that the desired effect is set as a percentage of maximal effect. The desired effect to the power supply is calculated from the registration of a measured weight on a field and the desired effect for liberation by the said magnetrons and depositing in said raw meat and on measurement of said raw meat maximum temperature after said step a). The desired effect is experienced quickly by run in of the plant comprising said microwave oven.
When for example the fish meat mentioned above is at the entrance to the first field in the microwave oven, the first row magnetrons are switched on with the calculated effect, the next row is switched on and the first is switched off when the next field is registered in position, the effect is kept throughout all four rows and is not changed before a new portion is registered, or switched off, if there is no raw materials on the field. The temperature increase should not exceed 26°. By this temperature the cell membrane denatures and becomes less elastic. Also, the cell membrane which encircle the red blood corpuscle is affected by the microwaves by excitation of the watermolecules. The microwave treatment is, thus most preferably, performed in a microwave oven equipped with rows of magnetrons, where each row may provide a certain amount of energy to the raw meat. Subsequently to the microwave treatment the fish fillets are carried on to the plug salter, which is the control unit for the conveyor belt speed. In addition, the plug salter has a large number of set points for pressure, belt and needle speeds, which makes at ideal as control unit.
Finally, the fish fillets are exposed to vibration, either mechanically or by applying ultrasonic vibration. Mechanical vibration is more labour-intensive due to that the fillets have to be placed in a vessel with brine and subsequently vibrated on a vibration board.
The time used by mechanical vibration is high relative to ultrasonic vibration that is dissolution of the cell structure (lysis) by means of ultrasound.
Ultrasonic treatment creates cavitation. In the run of a low pressure cycle, the bubbles achieves a volume where they no longer can absorb energy, and collapes violently in a high pressure cycle. This phenomenon is called cavitation. The countless small and strong imploding bubbles provide a very strong effect. The energy which is deliberated by a single repaying bubble is extremely low, but many millions of bubbles collapes every second and put together the effect becomes very intensive. The purpose with the combination of microwaves and ultrasound is to establish fast access to the intracellular, salt soluble proteins. By traditional salting the cell membrane has been broken down after about two 24 hours and the salt content intracellularly is gradually increased. This entails that the water binding property is decreased. The proteins denature as a consequence of this. In addition to this 12-14% protein, which precipitates, is lost. By aid of microwaves and ultrasound there is established fast access for the salt to the proteins. The fast access is due to the elastic cell membrane altering viscosity by treatment with microwaves. Microwaves are electromagnetic waves, which are capable to heat up water, due to the turns of the polar water dipoles, the turns correspond to the frequency, which is 2,45 GHz. It has by experiments been shown that the temperature increase, where water and the fat pellicle of the cell membrane are in contact is the largest. It results in that in the contact between lipids and water a high temperature arises without it destroying the surrounding raw meat during the process.

### EXAMPLES

### Samples for a comparison:

By sample 1 160 fresh temperature regulated cods were withdrawn for samples with microwave and ultrasonic technique for experiment for comparison. They were pairwise withdrawn directly from the filet machine, registered and individualized marked. All right sides received even numbers the total weight was 197,311 kg. The left sides received uneven numbers and the total weight was 200,146 kg. Subsequent to microwave treatment of the left sides, the right/left side were plug salted with a brine of 18°Baumé. The brine was prepared from NaCl vacuum salt. The left sides were ultrasonic treated. The individualized marked filets were evenly distributed in a 1000 litre vessel with 400 litre brine of 18°Baumé prepared from NaCl vacuum salt.
After 24 hours in brine the fillets are relayed lay-wise in a vessel with bottom plugs. Between each layer there was sprinkled coarse corny sea salt. The vessel was sealed with plast wrap and placed in a maturing room. After 10 24 hours in closed vessel the bottom plugs were removed and after 2 days the fish fillets were freed from surplus of salt, weighted and packed in cartons all with 4 kg packing salt of a middle coarse type and placed in a cooling room.
All the samples are produced without other aids than salt.

Left side microwave- and ultrasonic treated:
Mid weight: 204,71kg =102,28%
After 1 month: 197,50kg = 98,68%
After 2 months: 193,42 kg=96,64%

Right side traditionally salted that is plug salted with a brine of 18°Baumé:
Mid weight: 181,14kg = 91,1%
After 1 month: 170,50kg = 86,5%
After 2 months: 167,15kg = 84,8%

By sample 2 160 thawed, temperature regulated cods were withdrawn to trials with microwave and ultrasonic technique for experiments for comparison. They were pairwise withdrawn directly from the filet machine, registered and individualized marked. All right side received even numbers, the total weight was 193,678 kg, left sides received uneven numbers the total weight was 194,816 kg. After microwave treatment, plug salting and ultrasonic treatment of the left sides, the right sides were plug salted both with a brine of 18°Baumé. The brine was prepared from NaCl vacuum salt. The individualized marked fillets were evenly distributed in a 1000 litre vessel with 400 litre brine of 18°Baumé prepared from NaCl vacuum salt.

Left side microwave treated, plug salted and ultrasonic treated:
Mid weight: 196,76kg = 101,0%
After 1 month: 190,91kg = 98,0%
After 2 months: 188,58kg = 96,8%
Right side traditionally salted that is plug salted with a brine of 18°Baumé:
Mid weight: 181,06kg = 93,8%
After 1 month: 171,41kg = 88,5%
After 2 months: 167,34kg = 86,4%
All the samples are produced without other aids than salt.

By sample 3 170 fresh temperature regulated cods were withdrawn for trials with microwave and ultrasonic technique for experiments for comparison. They were withdrawn directly from the filet machine and weighed, the total weight was 431,1 kg. After microwave treatment of the fillets they were plug salted with a brine of 18°Baumé. The brine was prepared from NaCl vacuum salt. The fillets were finally ultrasonic treated and placed in a 1000 litre vessel with 400 litre brine of 18°Baumé prepared from NaCl vacuum salt.
After 24 hours in the brine the fillets are relayed lay-wise in a vessel with bottom plugs. Between each layer there was sprinkled coarse corny sea salt. The vessel was sealed with plast wrap and placed in a maturing room. The sample was prepared with 24 hours in brine, 10 24 hours in a closed vessel, hereafter the bottom plugs were removed and 2 days later the fish fillets were freed from surplus of salt, weighted and packed in cartons all with 4 kg packing salt of a middle coarse type. The sample is produced without other aids than salt.
Mid weight: 435,93kg = 101,12%
After 1 month: 420,84kg = 97,62%
After 2 months: 412,99kg = 95,80%

By sample 4 160 thawed temperature regulated cods were withdrawn for trials with microwave and ultrasonic technique for experiments for comparison. They were withdrawn directly from the filet machine and weighed. The total weight was 407,1 kg. After microwave treatment of the fillets they were plug salted with a brine of 18°Baumé. The brine was prepared from NaCl vacuum salt. The fillets were finally ultrasonic treated and placed in a 1000 litre vessel with 400 litre brine of 18°Baumé prepared from NaCl vacuum salt.
After 24 hours in the brine the fillets are relayed lay-wise in a vessel with bottom plugs. Between each layer there was sprinkled coarse corny sea salt. The vessel was sealed with plast wrap and placed in a maturing room.
The sample was prepared with 24 hours in brine, 10 24 hours in a closed vessel, hereafter the bottom plugs were removed and 2 days later the fish fillets were freed from surplus of salt, weighted and packed in cartons all with 4 kg dry packing salt of a middle coarse type sprinkled between the layers.
The sample is produced without other aids than salt.
Mid weight: 414,43kg = 101,80%
After 1 month: 401,80kg = 98,70%
After 2 months: 392,04kg = 96,30%
All samples were stored in maturing room and later in cooling room under same temperatures.

**Table 1. Experiments for a comparison: The fast method for salting of fish meat, A, measured by the weight of the fish in % of the weight at the start. A: Microwave treatment, then plug salting and then ultrasonic treatment. B: Plug salting.**

| Sample | Method | Frozen and tharwed fish | | Fresh fish | |
|---|---|---|---|---|---|
| | | After 1 md | After 2mdr | After 1 md | After 2 mdr |
| 1 | A | - | - | 98,68 | 96,5 |
| 1 | B | - | - | 86,5 | 84,5 |
| 2 | A | 98,02 | 96,8 | - | - |
| 2 | B | 88,5 | 86,4 | - | - |
| 3 | A | - | - | 97,62 | 95,80 |
| 4 | A | 98,9 | 96,3 | - | - |

Even though the method according to the invention has been documented on fish meat from cods, the method is also applicable on other raw meat, only the thickness must not be too high. The cells of other types of meat are different, but not more different than the dissolution of the cell membranes will take place as effective as with fish meat.

Like this there has also been made experiments with bacon, which applying known technique is produced by a time-consuming method with a total time usage of 7 24 hours. Bacon is smoked salted meat of a thickness up to 7 cm. The method according to the present invention will result in a fast process, the production time incl. the following smoking and maturing will be 2 24 hours.

There has also been made experiments on smoked salmon. Salmon has to be treated below 26 grades Celsius, as salmon over this temperature loose the color.

By the method with microwave treatment as the first step there has been opened to the salt soluble proteins. This results in that the salt amount may be reduced and thus meet the desire of a lower salt content in smoked salmon products. The reason to the salt reduction is, that the cell membrane is broken down and salt in sufficient strength lower than by the traditional salting processes can enter into the protein. As a consequense there is saved large amounts of salt together with that there is obtained a taste and durably better final product.

The invention is a continuous process, which has purpose to bring the cell membrane in raw meat cells into solution, so that there is opened for access to the salt soluble proteins, which are situated inside the cells. The salt cannot pass the membrane, before it has been broken down, something that takes many hours, whereas by microwave treatment the break down happens instantly. Brine is injected thereafter into the raw meat in a dense pattern, such that the raw meat is even salted. For total dissolution of the cell membrane the raw meat is in the end treated with ultrasound, which creates lysis, which opens the cell membrane to the salt soluble proteins. This to secure a total dissolution of the cell membrane and the intracellular proteins.
The invention is suitable for the meat and fish industry, where there today is applied long salting processes. The invention solves the problem of fast access of salt to the salt soluble proteins, and there do not exist any known techniques for solving this problem.

## Claims

1. Method for the dissolution of the cell membrane in raw meat **characterized by** that it comprises the following steps:
a) The raw meat is treated with microwaves to lower the elasticity of the cell membranes of the raw meat,
b) hereafter the microwave treated raw meat is plug salted to achieve an even distribution of the added salt in the whole raw meat
c) thereafter the raw meat is vibration treated e.g. ultrasonic treated to ensure the solution of the cell membrane and proteins of the raw meat.

2. Method according to claim 1, wherein step a), and b) are performed continuously after each other, preferably, where step a), b) and c) are performed continuously after each other

3. Method according to claim 1 or 2, wherein said microwave treatment a) takes place by means of microwave oven which generates radio waves in the radio frequency area by means of magnetic field.

4. Method according to claim 3, wherein said magnetic field is a 2,45 GHz magnetic field.

5. Method according to claim 3 or 4, wherein said microwave treatment is performed by means of said microwave oven comprising magnetrons of e.g. 1000 watt for generation of said magnetic field in a plane parallel to the said raw meat.

6. Method according to any of the claims 1 to 5, wherein said microwave treatment is controlled, such that the temperature of said raw meat after step a) is kept at a temperature of at the most 26 grades C, preferably not exceeding 12 to 14 grades C for raw fish meat and, preferably not exceeding 16 to 26 grades C for raw meat from animals.

7. Method according to any of the claims 1 to 6, wherein said raw meat comes directly from a machine, which adapt said raw meat into pieces with a thickness of 2 to 7 cm, and put the adapted raw meat pieces on a conveyor belt, or already adapted raw meat is laid on a conveyor belt, where, then, the raw meat pieces are carried into said microwave tunnel oven by means of said conveyor belt.

8. Method according to claim 7, wherein said raw meat is in the form of planar pieces of raw meat.

9. Method according to claim 7 or 8, wherein said raw meat is raw fish meat and comes directly from a splitting machine in the form of fillets to a cutting belt, clean cutting, and orientation, such that the meat side turns upwards, where, then, the raw fish fillets are carried into said microwave tunnel oven by means of a conveyor belt.

10. Method according to any of the claims 3 to 9, where said magnetic field gives an effect, which is calculated from a registration of weight of said raw meat on said cutting belt or said conveyor belt and from measurement of said raw meat's maximum temperature after said step a).

11. Method according to any of the claims 1 to 10, where the plug salting takes place by means of a plug salter with a brine of 18°Baumé prepared from NaCl vacuum salt.

12. Method according to claim 11, wherein said salt concentration in the plug salting step b) is 3,2% to 5,8 % NaCl.

13. Method according to claim 11 or 12, wherein said plug salter controls the speed of said conveyor belt.

14. Plant for running a method according to any of the claims 1 to 13 **characterized by**, that it comprises a microwave oven, which comprises magnetrons in e.g. 4 rows across a conveyor belt and 4 rows in the longitudinal direction of said conveyor belt, where each magnetron has an effect of 1000 W.

15. Plant according to claim 14 for the conducting a method according to any of the claims 1 to 13 **characterized by** further comprising a plug salter right after said microwave oven.
